# EUROPÄISCHE PATENTSCHRIFT

(11) **EP 0 462 099 B1**
(45) Veröffentlichungstag und Bekanntmachung des Hinweises auf die Patenterteilung: **13.07.1994**
(21) Anmeldenummer: 91890105.9
(22) Anmeldetag: 15.05.1991
(51) Int. Cl.: F16H 21/42, B62M 3/04

(54) **Kurbeltrieb**
Crank drive
Entraînement à manivelle

(30) Priorität: 22.05.1990 AT 1131/90
(43) Veröffentlichungstag der Anmeldung: 18.12.1991
(73) Patentinhaber: Buchegger, Rudolf, A-4656 Kirchham 156 (AT)
(72) Erfinder: Buchegger, Rudolf, A-4656 Kirchham 156 (AT)

(56) Entgegenhaltungen:
- CH-A- 605 241
- US-A- 4 800 768

## Beschreibung

Die Erfindung bezieht sich auf einen Kurbeltrieb, mit einer in einem Gehäuse od. dgl. drehbar gelagerten Kurbelwelle und einer aus einer drehfest an der Kurbelwelle angesetzten Kurbelwange und einem radial verschiebbar in der Kurbelwange geführten Kurbelarm bestehenden Kurbel, wobei zur Umwandlung der Kurbelarmhubbewegung in eine Kurbelwellendrehbewegung ein Zwischengetriebe mit am Kurbelarm in Hubrichtung angeordneter Zahnstange und entsprechend verzahnten, jeweils entweder der Kurbelwange oder dem Gehäuse zugeordneten Übertragungs- und Stützrädern und den Hubbewegungen gemäß wechselweise wirksamen Zahnsegmenten vorgesehen ist.

Kurbeltriebe dienen zur Umwandlung einer Hubbewegung in eine Drehbewegung, wobei die Kurbeltriebe meist mit Kurbelarmen konstanter Länge, also mit gleichbleibendem Kurbelradius arbeiten und die am Kurbelzapfen angreifende Hubkraft in ein von der Kurbelwelle ableitbares Nutzdrehmoment umsetzen. Die Hubkraft läßt sich dabei in eine Radial- und eine Tangentialkomponente zerlegen, von denen bisher die jeweilige Tangentialkomponente zusammen mit dem Kurbelradius das nutzbare Drehmoment bestimmt und die Radialkomponente für das Nutzmoment verloren geht. Es ergibt sich pro Kurbeldrehung eine von der Winkelstellung des Kurbelarms abhängige Drehmomentenverteilung, da die Tangentialkomponente vom oberen Totpunkt (Kurbelwinkel 0°) bis zu einer Vierteldrehung (Kurbelwinkel 90°) von 0 bis zu einem Maximum ansteigt und dann bis zum unteren Totpunkt (Kurbelwinkel 180°) wieder auf 0 abfällt usw.. Die unnützbare Radialkomponente führt somit zu einem beträchtlichen Leistungsverlust und von der am Kurbelzapfen angreifenden Kraft sind nur ca. 63% als Drehmoment von der Kurbelwelle ableitbar.

Wie die CH-A5-605 241 zeigt, gibt es auch schon Kurbeltriebe mit einem in einer Kurbelwange radialverschiebbaren Kurbelarm und einem Zwischengetriebe zur Umwandlung der Kurbelarmhubbewegung in eine Kurbelwellendrehbewegung. Das Zwischengetriebe besteht dabei aus einer kurbelarmfesten Zahnstange, in der Kurbelwange drehbar gelagerten Übertragungsrädern und gehäusefesten, einander ergänzenden halbkreisförmigen Zahnsegmenten, von welchen Übertragungsrädern eines als mit der Zahnstange kämmendes Ritzel dient und zwei als dazu koaxiale, mit den fest abgestützten Zahnsegmenten wechselweise eingreifende Zwischenräder vorgesehen sind, so daß eine Hubbewegung der Zahnstange eine Drehbewegung der Übertragungsräder bedingt, die dadurch an den Zahnsegmenten ablaufen und durch den Eingriffswechsel zwischen den beiden Zahnsegmenten eine gleichbleibende Drehbewegung der Kurbelwange mit sich bringen. Der Kurbelarm nimmt hier allerdings bei einem 90°igen Kurbelwinkel seine äußerste und bei einem 270°igen Kurbelwinkel seine innerste Radialstellung ein und erreicht pro Umdrehung auch nur jeweils einmal diese Extremstellungen. Damit soll vor allem der Kurbelarm im Bereich der größten Werte der Tangentialkomponente verlängert und so das wirksame Drehmoment erhöht werden, eine zusätzliche Nutzung der Radialkomponente für die Kraft-Momentumwandlung ist jedoch nur bedingt möglich. Die Radialkomponente führt sogar durch das Zwischengetriebe im Kurbelwinkelbereich von 0° bis 180° zu einem Gegenmoment, was den Wirkungsgrad eher verschlechtert, da ja auch die Vorteile des aufgrund des verlängerten Kurbelarmes erhöhten Drehmomentes auf der einen Seite durch das aufgrund des verkürzten Kurbelarmes verkleinerte Drehmoment auf der anderen Seite wieder aufgehoben werden.

Der Erfindung liegt daher die Aufgabe zugrunde, diese Mängel zu beseitigen und einen Kurbeltrieb der eingangs geschilderten Art zu schaffen, der durch eine zusätzliche Nutzung der Radialkomponente eine wesentliche Steigerung des Wirkungsgrades bei der Umwandlung einer Hubbewegung in eine Drehbewegung erlaubt.

Die Erfindung löst diese Aufgabe dadurch, daß der Kurbelarm im Bereich des oberen Totpunktes der Kurbelbewegung seine äußerste Radialstellung einnimmt und daß das Zwischengetriebe ein Paar kurbelarmfeste, parallel und gegengleich ausgerichtete Zahnstangen, ein gehäusefestes, zur Kurbelwelle koaxiales Stützrad sowie ein in der Kurbelwange drehbar gelagertes Paar Übertragungsräder und mit diesem drehfest verbundene, koaxiale Zahnsegmente umfaßt, wobei das Stützrad, die Übertragungsräder und die Zahnsegmente gleiche Teilkreisdurchmesser ihrer Verzahnungen aufweisen und mit ihren Achsen in einer gemeinsamen, normal zum Zahnstangenpaar verlaufenden Ebene liegen und einerseits das Übertragungsräderpaar ständig mit dem Stützrad, anderseits die Zahnsegmente jeweils abwechselnd mit dem Zahnstangenpaar in Eingriff stehen.

Durch dieses Zwischengetriebe kann nun außer der Tangentialkomponente der am Kurbelarm einwirkenden Hubkraft auch deren Radialkomponente zur Drehmomentenerzeugung genutzt werden, da diese Radialkomponente über den radial verschiebbaren Kurbelarm und das diese Hubbewegung in eine Drehbewegung umwandelnde Zwischengetriebe stets gleichsinnig wie das tangentialkraftbedingte Drehmoment drehend auf die Kurbelwelle einwirkt. Die Radialverstellung des Kurbelarmes dient demnach vor allem zur Erzeugung eines radialkomponentenbedingten Momentes und nicht zur Beeinflussung des tangentialkomponentenbedingten Drehmomentes. Die Radialverschiebung des Kurbelarmes und damit des Zahnstangenpaares wird in eine Drehbewegung der Zahnsegmente umgewandelt, die gleichzeitig die Übertragungsräder in Drehung versetzen und am zentralen Stützrad ablaufen lassen. Da die Übertragungsräder in der Kurbelwange gelagert sind und sich das Stützrad drehfest am Gehäuse abstützt, wird durch diese Ablaufbewegung die Kurbelwange mit einem entsprechenden, von der auf den Kurbelarm bzw. das Zahnstangenpaar einwirkenden Radialkomponente abhängigen Moment belastet, so daß die Radialkomponente tatsächlich für das an der Kurbelwelle abnehmbare Nutzmoment wirksam ist. Das Zahnstangenpaar und die entsprechend zugehörigen Zahnsegmente gewährleisten durch ihr abwechselndes Ineinandergreifen über die volle Umdrehung einen gleichbleibenden Drehsinn und das an der Kurbelwelle abnehmbare Nutzmoment setzt sich jeweils im kurbelwinkelabhängigen Verhältnis zwischen Tangential- und Radialkomponenten der Hubkraft aus tangential- und radialkomponentenbedingten Momenten zusammen, was die angestrebte Wirkungsgradverbesserung gewährleistet.

Sind die Verzahnungsabschnitte der Zahnsegmente jeweils an eine Vierteldrehung angepaßt und weisen die Zahnsegmente jeweils zwei diametral gegenüberliegende Verzahnungsabschnitte auf, durchläuft der Kurbelarm pro Umdrehung jeweils zweimal den Maximal- und Minimalwert, wodurch die Verschiebewege des Kurbelarmes verkürzt und der gesamte Bewegungsablauf vergleichmäßigt wird.

Zur Vereinfachung der Herstellung und zur Steigerung der Festigkeitseigenschaften können die Übertragungsräder mit den zugehörigen Zahnsegmenten jeweils eine Baueinheit bilden, wodurch sich auch der Platzbedarf für das Zwischengetriebe verringern läßt.

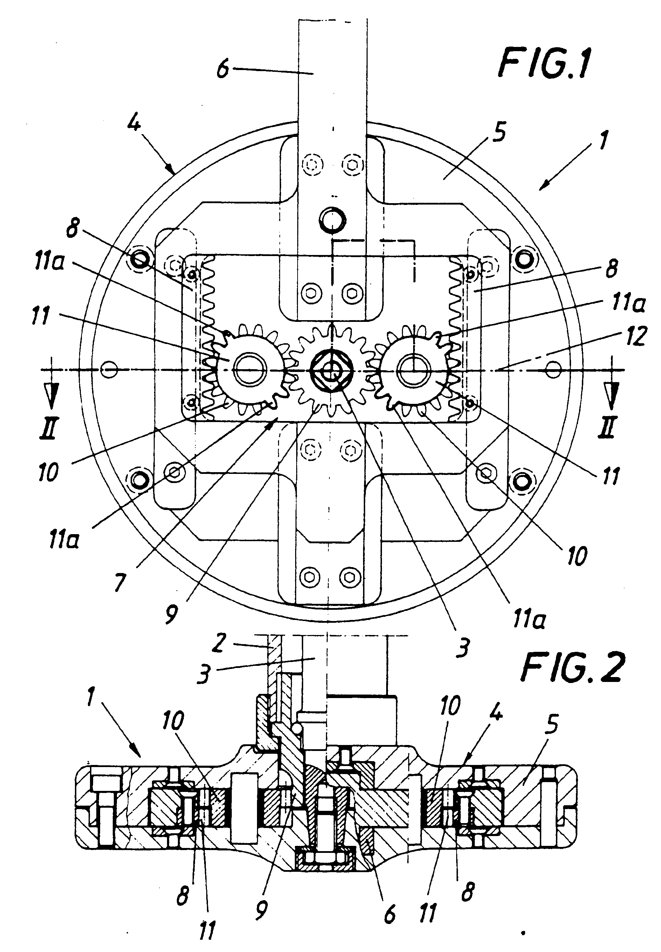

In der Zeichnung ist der Erfindungsgegenstand rein schematisch veranschaulicht, und zwar zeigen
- Fig.1 und 2: ein Ausführungsbeispiel eines erfindungsgemäßen Kurbeltriebes in Stirnansicht mit abgenommenem Kurbeldeckel bzw. im Axialschnitt nach der Linie II-II der Fig. 1 und die
- Fig. 3 bis 7: verschiedene Kurbelwinkelstellungen dieses Getriebes im Funktionsschema

Ein Kurbeltrieb 1 besteht aus einer drehbar in einem Gehäuse 2 gelagerten Kurbelwelle 3 und einer Kurbel 4, die sich aus einer drehfest an der Kurbelwelle 3 angesetzten Kurbelwange 5 und einem in der Kurbelwange 5 radialverschiebbar geführten Kurbelarm 6 zusammensetzt.

Um die Radialkomponente der Hubkraft für das Nutzmoment wirksam machen zu können, gibt es ein Zwischengetriebe 7, das ein Paar kurbelarmfeste und gegengleich ausgerichtete Zahnstangen 8, ein drehfest im Gehäuse 2 eingesetztes, zur Kurbelwelle 3 koaxiales Stützrad 9 sowie ein in der Kurbelwange 5 drehbar gelagertes Paar Übertragungsräder 10 und jeweils mit diesen drehfest verbundene, koaxiale Zahnsegmente 11 umfaßt. Das Stützrad 9, die Übertragungsräder 10 und die Zahnsegmente 11 weisen gleiche Teilkreisdurchmesser ihrer Verzahnungen auf und ihre Achsen liegen in einer gemeinsamen, normal zum Zahnstangenpaar 8 verlaufenden Ebene 12, wobei nun das Übertragungsräderpaar 10 ständig mit dem Stützrad 9 kämmt und die Zahnsegmente 11 jeweils abwechselnd mit den zugehörigen Zahnstangen 8 im Eingriff stehen. Die Zahnsegmente 11 besitzen jeweils an eine Vierteldrehung angepaßte Verzahnungsabschnitte 11a (in der Zeichnung sind das wegen der großen Zahnteilung jeweils nur 2 Zähne) und jedes Zahnsegment 11 weist zwei solche einander diametral gegenüberliegende Verzahnungsabschnitte 11a auf, so daß ein Hub des Kurbelarmes 6 innerhalb einer Vierteldrehung der Kurbelwange 5 erfolgt.

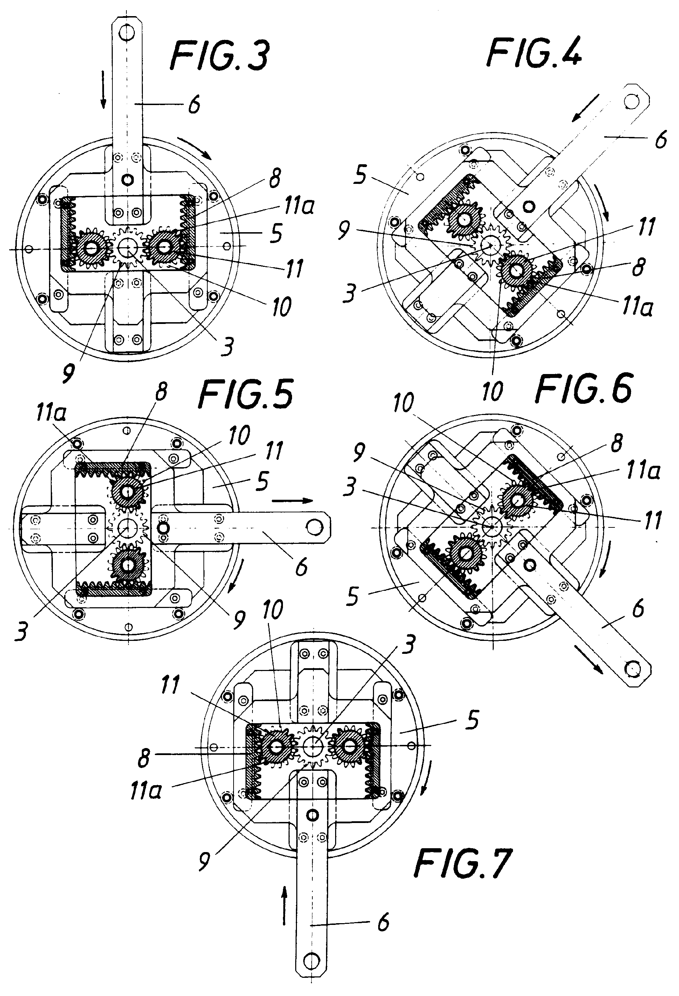

Der Kurbelarm 6 nimmt im oberen Totpunkt der Kurbelbewegung seine äußerste Radialstellung ein, in der eine auf den Kurbelarm wirkende Hubkraft als reine Radialkomponente ohne Tangentialkomponente auftritt. Diese Radialkomponente wirkt über das Zahnstangenpaar 8 auf die Zahnsegmente 11, wobei zeichnungsgemäß die rechte Zahnstange 8 bei der beginnenden Abwärtsbewegung mit dem einen Verzahnungsabschnitt 11a des rechten Zahnsegmentes 11 in Eingriff kommt, während gleichzeitig einer der Verzahnungsabschnitte des linken Zahnsegmentes mit der linken Zahnstange außer Eingriff kommt (Fig.3). Dadurch kann der Kurbelarm 6 relativ zur Kurbelwange 5 abwärts bewegt werden, so daß über das rechte Zahnsegment 11 das rechte Übertragungsrad 10 verdreht wird und sich auf Grund des Eingriffes dieses Übertagungsrades mit dem feststehenden Stützrad 9 eine Abwälzbewegung und damit eine Drehbewegung im Uhrzeigersinn der Kurbelwange 5 und damit der Kurbelwelle 3 ergibt. Während des Eingriffes zwischen rechter Zahnstange 8 und rechtem Zahnsegment 11 laufen die linke Zahnstange und das linke Zahnsegment wegen des hier fehlenden Verzahnungsabschnittes eingriffsfreinebeneinander (Fig. 4).

Erreicht der Kurbelarm 6 nach einer Vierteldrehung seine innerste Radialstellung (Fig. 5) sind die Zahnsegmente 11 soweit verdreht, daß das rechte Zahnsegment, jetzt das untere, den Eingriff mit der zugehörenden Zahnstange 8 verliert und das linke Zahnsegment, jetzt das obere, mit seinem entsprechenden Verzahnungsabschnitt 11a mit der oberen Zahnstange 8 in Eingriff kommt. Die nun beginnende Auswärts-Hubbewegung des Kurbelarmes 6 führt daher zu einer Verdrehung des oberen Zahnsegmentes wiederum im Uhrzeigersinn, während das untere Zahnsegment eingriffslos weiterdreht, und das obere Zahnsegment wirkt über das zugehörige Übertragungsrad 10, das am Stützrad 9 abläuft, ebenfalls drehantreibend auf die Kurbelwange 5 und die Kurbelwelle 3 (Fig. 6).

Im unteren Totpunkt, also nach einer halben Drehung, nimmt der Kurbelarm 6 wieder seine äußerste Radialstellung ein und das Zwischengetriebe 7 wiederholt seinen Bewegungsablauf wie bei der Kurbelbewegung vom oberen Totpunkt aus, nur daß nun die Zahnsegmente 11 die jeweils anderen Verzahnungsabschnitten 11a zum Einsatz bringen.

Um den heiklen Vorgang der Hubbewegungsumkehr und des dabei ablaufenden Eingriffswechsels zwischen den Zahnsegmenten und den Zahnstangen einwandfrei abwickeln zu können, sind nicht weiter dargestellte Hubbegrenzungsanschläge und Führungen vorgesehen, die die Gefahr eines beidseitigen Eingriffsverlustes und damit einer Funktionsstörung bannen.

Während der Kurbelbewegung vom oberen Totpunkt bis zu einem 90°igen Kurbelwinkel nimmt also die radiale Länge des Kurbelarmes von einem Maximum bis zu einem Minimum ab, wobei gleichzeitig die Radialkomponente der Hubkraft von einem Maximum auf ein Minimum ab- und die entsprechende Tangentialkomponente von einem Minimum auf ein Maximum zunimmt. Von dieser 90°igen Kurbelwinkellage bis zum unteren Totpunkt verlängert sich dann wieder der Kurbelarm, die Radialkomponente nimmt erneut zu und die Tangentialkomponente ab, wobei sich dieser Zyklus im Kurbelwinkelbereich von 180-360°, also vom unteren Totpunkt zurück zum oberen Totpunkt genauso fortsetzt usw.. Die auftretenden Hubkraftkomponenten sind nun, unabhängig davon, ob sie in den Extremlagen des oberen und unteren Totpunktes und der 90° und 270°igen Kurbelwinkellage jeweils allein oder in den Zwischenlagen gemeinsam auftreten, stets im möglichen Ausmaß für das abnehmbare Nutzmoment wirksam, und zwar die Tangentialkomponente direkt über den Kurbelarm selbst und die Radialkomponente indirekt über Kurbelarm und Zwischengetriebe, so daß sich zumindest theoretisch eine verlustfreie Umwandlung von Hubbewegung und Drehbewegung ergibt.

## Patentansprüche

1. Kurbeltrieb (1), mit einer in einem Gehäuse od. dgl. drehbar gelagerten Kurbelwelle (3) und einer aus einer drehfest an der Kurbelwelle (3) angesetzten Kurbelwange (5) und einem radial verschiebbar in der Kurbelwange (5) geführten Kurbelarm (6) bestehenden Kurbel, wobei zur Umwandlung der Kurbelarmhubbewegung in eine Kurbelwellendrehbewegung ein zwischengetriebe (7) mit am Kurbelarm (6) in Hubrichtung angeordneter zahnstange (8) und entsprechend verzahnten, jeweils entweder der Kurbelwange (5) oder dem Gehäuse zugeordneten Übertragungs- und Stützrädern (9, 10) und den Hubbewegungen gemäß wechselweise wirksamen zahnsegmenten (11) vorgesehen ist, dadurch gekennzeichnet, daß der Kurbelarm (6) im Bereich des oberen Totpunktes der Kurbelbewegung seine äußerste Radialstellung einnimmt und daß das zwischengetriebe (7) ein Paar kurbelarmfeste, parallel und gegengleich ausgerichtete zahnstangen (8), ein gehäusefestes, zur Kurbelwelle (3) koaxiales Stützrad (9) sowie ein in der Kurbelwange (5) drehbar gelagertes Paar Übertragungsräder (10) und mit diesen drehfest verbundene, koaxiale zahnsegmente (11) umfaßt, wobei das Stützrad (9), die Übertragungsräder (10) und die zahnsegmente (11) gleiche Teilkreisdurchmesser ihrer Verzahnungen aufweisen und mit ihren Achsen in einer gemeinsamen, normal zum zahnstangenpaar (8) verlaufenden Ebene (12) liegen und einerseits das Übertragungsräderpaar (10) ständig mit dem Stützrad (9), anderseits die zahnsegmente (11) jeweils abwechselnd mit dem zahnstangenpaar (8) in Eingriff stehen.

2. Kurbeltrieb nach Anspruch 1, dadurch gekennzeichnet, daß die Verzahnungsabschnitte (11a) der zahnsegmente (11) jeweils an eine Vierteldrehung angepaßt sind und die zahnsegmente (11) jeweils zwei diametral gegenüberliegende Verzahnungsabschnitte (11a) aufweisen.

3. Kurbeltrieb, nach Anspruch 1 oder 2, dadurch gekennzeichnet, daß die Übertragungsräder (10) mit den zugehörigen zahnsegmenten (11) jeweils eine Baueinheit bilden.

## Claims

1. Crank mechanism (1) with a rotary crankshaft (3) run on bearings in a crankcase or equiv. and a crank consisting of a crank web (5) with non-rotary attachment to the crankshaft (3) and guided radial sliding crank arm (6) in the crank web (5) where in order to convert the lifting motion of the crank arm into a rotary motion of the crankshaft, an intermediate gear (7) with a rack (8) arranged on the crank arm (6) in the lifting direction and corresponding toothed transmission and support wheels (9, 10) assigned to either the crank web (5) or the case and lifting motions in accordance with alternately acting toothed segments (11) are provided, distinguished by the fact that the extreme radial position of the crank arm (6) is in the area of the upper dead centre of the crank motion and that the intermediate gear (7) comprises a pair of parallel, diametrically opposed racks (8) fixed to the crank arm, a support wheel (9) coaxial to the crankshaft (3) and fixed to the case, and a pair of pivoted transmission wheels (10) situated in the crank web (5) and coaxial toothed segments (11) with non-rotary attachment to these, where the support wheel (9), the transmission wheels (10) and the toothed segments (11) have the same gearing reference diameter and lie with their axes in a common plane (12) normally running to the rack pair (8) and where on the one hand there is constant meshing between the transmission wheel pair (10) and the support wheel (9) and on the other hand alternate meshing between the toothed segments (11) and the rack pair (8).

2. Crank mechanism in accordance with claim 1, distinguished by the fact that the gearing sections (11a) of the toothed segments (11) are each adjusted to a quarter turn and the toothed segments (11) each have two diametrically opposed gearing sections (11a).

3. Crank mechanism in accordance with claim 1 or 2, distinguished by the fact that the transmission wheels (10) form a unit with the relevant toothed segments (11) in each case.

## Revendications

1. Mécanisme à manivelle (1) avec un arbre-manivelle (3) pouvant tourner librement dans un carter ou bâti quelconque similaire et une manivelle constituée d'une flasque de manivelle (5) montée fixement sur l'arbre-manivelle (3) ainsi que d'un bras de manivelle (6) à déplacement radial logé dans la flasque de manivelle (5). Pour permettre la transformation du mouvement linéaire alternatif du bras de manivelle en un mouvement de rotation de l'arbre-manivelle, une transmission intermédiaire (7) a été prévue avec une crémaillère (8) sur le bras de manivelle (6) disposée dans le sens du mouvement et un engrenage correspondant de roues de transmission et de support (9, 10) attachées respectivement à la flasque de manivelle (5) ou au carter et des segments dentés (11) à action alternative en fonction des mouvements. Ce mécanisme est caractérisé par le fait que le bras de manivelle (6) se place dans la position radiale extrême aux environs du point mort haut du mouvement de manivelle et par la fait que la transmission intermédiaire (7) comprend une paire de crémaillères (8) courtes, fixées sur le bras de manivelle, disposées parallèlement et de façon diamétralement opposée, une roue de support (9) co-axiale avec l'arbre-manivelle fixée sur le carter ainsi qu'une paire de roues de transmission (10) tournant librement dans la flasque de manivelle et des segments dentés (11) co-axiaux attachés fixement aux roues de transmission. La roue de support (9), les roues de transmission (10) et les segments dentés (11) ont des dentures d'un même rayon primitif de référence, leurs axes se situent sur un même plan (12) en ligne normale par rapport à la paire de crémaillères (8); d'une part, la paire de roues de transmission (10) s'engrène en permanence dans la roue de support (9), d'autre part les segments dentés (11) s'engrènent alternativement dans la paire de crémaillères (8).

2. Mécanisme de manivelle selon spécification 1, caractérisé par le fait que les parties avec dentures (11a) des segments dentés (11) sont adaptées chacune à un quart de tour et que les segments dentés (11) présentent chacun deux parties avec dentures (11a) diamétralement opposées.

3. Mécanisme à manivelle selon spécification 1 ou 2, caractérisé par le fait que les roues de transmission (10) forment chacune une unité de construction avec les segments dentés (11) correspondants.
